# EUROPÄISCHE PATENTSCHRIFT

(11) **EP 0 348 759 B1**
(45) Veröffentlichungstag und Bekanntmachung des Hinweises auf die Patenterteilung: **01.02.1995**
(21) Anmeldenummer: 89111022.3
(22) Anmeldetag: 17.06.1989
(51) Int. Cl.: C08K 5/3492, C08L 77/00, C08K 7/14

(54) **Schwerentflammbare Polyamide**
Flameresistant polyamides
Polyamides résistant à la flamme

(30) Priorität: 30.06.1988 DE 3822091
(43) Veröffentlichungstag der Anmeldung: 03.01.1990
(73) Patentinhaber: BAYER AG, 51368 Leverkusen (DE)
(72) Erfinder: Nielinger, Werner, Dr., D-4150 Krefeld (DE)

(56) Entgegenhaltungen:
- EP-A- 0 241 702
- DE-A- 2 740 092
- DE-A- 3 248 330
- DE-A- 3 722 118
- US-A- 3 660 344
- PATENT ABSTRACTS OF JAPAN vol. 4, no. 42 (C-5)(524) 03 April 1980,& JP-A-55 13742

## Beschreibung

Gegenstand der Erfindung sind brandwidrig ausgerüstete Polyamide auf Basis von Xylylendiaminen und aromatischen Dicarbonsäuren, wobei als Flammschutzmittel nur solche verwendet werden, welche kein Halogen und keinen roten Phosphor enthalten. Besonders bevorzugt als Flammschutzmittel ist Melamin.

Polyamide zeichnen sich durch eine Reihe hervorragender Eigenschaften aus, wie hohe Zähigkeit, Steifigkeit, Abriebfestigkeit und Härte, Sie haben deshalb im technischen Bereich eine Vielzahl von Anwendungen gefunden. Durch Verstärkung mit Glasfasern werden einige Eigenschaften, vor allem die Steifigkeit, weiter erhöht. Dadurch können neue Einsatzgebiete erschlossen werden; beispielsweise wird die Verwendung der Produkte im Elektrobereich auch bei höheren Temperaturen ermöglicht. Für derartige Anwendungen werden heutzutage zunehmend brandwidrige Einstellungen verlangt, wobei man sich in jüngster Zeit bemüht, nur solche Flammschutzmittel zu verwenden, die bei der Verarbeitung oder im Brandfalle keine toxikologisch bedenklichen Stoffe bilden.

Für die Brandschutzausrüstung der Standardpolyamide 6 und 66 haben bisher nur roter Phosphor, eine Kombination aus organischen Halogenverbindungen mit synergistisch wirkenden Metalloxiden oder Metallsalzen sowie stickstoffhaltige Verbindungen wie Melamin eine praktische Bedeutung erlangt. Für glasfaserverstärkte Polyamide haben sich roter Phosphor und Halogenverbindungen als die wirksamsten Brandschutzmittel erwiesen. Diese Additive sind jedoch teilweise bezüglich Handhabung und Einarbeitung nicht unproblematisch.

Ein weiteres Flammschutzmittel für Polyamide ist Melamin. Es wird beispielsweise in der DE-AS 1 694 254 empfohlen. Die melaminhaltigen, glasfaserverstärkten Standardpolyamide erreichen aber im Brandtest nach UL, Subj. 94, nicht die Bewertung VO. Dies ist nach der Lehre der DE-OS 3 609 341 nur dann möglich, wenn ungeschlichtete Glasfasern verwendet werden. Ungeschlichtete Glasfasern führen aber zu einer Abnahme der mechanischen Eigenschaften der Polyamide, insbesondere der Zähigkeit.

Ein weiterer Nachteil melaminhaltiger Produkte ist die häufig schlechte Oberflächenqualität der Formteile. Die Ursachen dafür sind die Sublimation des Melamins während der Verarbeitung an die Wandungen der Werkzeuge und die Migration des Melamins an die Oberfläche der Formteile, vor allem bei Lagerung an feuchter Atmosphäre bei erhöhter Temperatur.

Durch verschiedene Maßnahmen hat man bereits versucht, die Migration des Melamins zu verhindern, beispielsweise durch Verwendung von Salzen, wie Melaminsulfat (Jap.-PS 52 027 457), Melamindemisulfat (EP-PS 1322), Melaminphosphat (FR-PS 2 364 942), Melamincyanurat (DE-AS 2 740 092). Auch der Zusatz von Polyacetalen (DE-OS 3 248 330) ist empfohlen worden. Diese Vorschläge lösen das Problem der Migration des Melamins jedoch noch nicht in zufriedenstellender Weise, da entweder die Belagbildung nicht vollständig beseitigt wird oder die Flammschutzmittel bzw. die Polyamide abgebaut werden können.

Überraschenderweise wurde nun gefunden, daß die genannten Nachteile nicht auftreten, wenn man Polyamide aus Xylylendiaminen und überwiegend aromatischen Dicarbonsäuren mit Melamin brandwidrig ausrüstet.

Polyamide aus Xylylendiaminen und aromatischen Dicarbonsäuren sind bereits bekannt, so aus der DE-OS 2 145 260, der US-PS 2 766 222, der Jap.-PS 33 277/72.

Zur Herstellung der erfindungsgemäßen flammfesten Polyamide, die keinen roten Phosphor und kein Halogen enthalten, sind nur Produkte geeignet, die überwiegend aus aromatenhaltigen Monomeren bestehen. Die vorteilhafte, brandwidrige Ausrüstung mit Melamin war für derartige Polyamide nicht bekannt und es war nicht vorherzusehen, daß gerade diese Polyamide einen derartigen Effekt ergeben.

### Gegenstand der Erfindung sind

Brandwidrig ausgerüstete, thermoplastisch verarbeitbare Polyamidformmassen mit guten Oberflächen, dadurch gekennzeichnet, daß das Polyamid hergestellt wird aus
A) 25 bis 50 Mol % Xylylendiamin,
B) 15 bis 50 Mol % aromatischen Dicarbonsäuren wie Isophthalsäure und Terephthalsäure,
C) 0 bis 25 Mol % nicht aromatischen Diaminen, und/oder
D) 0 bis 35 Mol % nicht aromatischen Dicarbonsäuren,
wobei die Summe der aromatischen Diamine und Dicarbonsäuren wenigstens 70 Mol % beträgt und wobei Melamin als Flammschutzmittel in 5-20 Gew.-% verwendet wird.

Die brandwidrig ausgerüsteten thermoplastisch verarbeitbaren Polyamidformmassen enthalten 25 bis 50, vorzugsweise 30 bis 50 Mol-%, Xylylendiamin und 15 bis 50, vorzugsweise 20 bis 50 Mol-%, aromatische Dicarbonsäuren und 0 bis 25, vorzugsweise 0 bis 20 Mol-%, nichtaromatische Diamine und/oder 0 bis 35, vorzugsweise 0 bis 30 Mol-%, nichtaromatische Dicarbonsäuren, wobei die Summe der aromatenhaltigen Diamine und Dicarbonsäuren wenigstens 70 Mol-% beträgt.

Als Xylylendiamine kommen die isomeren Xylylendiamine in Betracht; bevorzugt sind Gemische aus m- und p-Xylylendiamin sowie das m-Xylylendiamin. Geeignete aromatische Dicarbonsäuren sind Isophthalsäure und Terephthalsäure.

Als nichtaromatische Comonomere, die miteinkondensiert werden können, sind beispielhaft zu nennen: Hexamethylendiamin, Bis-(aminomethyl)-cyclohexan, Bis-(4-aminocyclohexyl)-methan, ferner Adipinsäure, Azelainsäure, Sebazinsäure, Decandicarbonsäure. Auch der Zusatz von Aminocarbonsäuren oder ihren Lactamen, wie ε-Caprolactam, Laurinlactam, ω-Aminoundecansäure, ist möglich.

Besonders geeignete Polyamide sind das Polyamid aus m-Xylylendiamin und Isophthalsäure, aus m-Xylylendiamin, Terephthalsäure und Adipinsäure mit 10 bis 35, bevorzugt 15 bis 35 Mol-%, Adipinsäure, aus m-Xylylendiamin, Hexamethylendiamin und Terephthalsäure mit 1 bis 20, bevorzugt 3 bis 10 Mol-%, Hexamethylendiamin, ferner aus m-Xylylendiamin, Hexamethylendiamin, Adipinsäure und Terephthalsäure mit 1 bis 20, vorzugsweise 3 bis 10 Mol-%, Hexamethylendiamin und 5 bis 25, vorzugsweise 10 bis 20 Mol-% Adipinsäure sowie Copolyamide aus m-Xylylendiamin. Terephthalsäure und Caprolactam mit 10 bis 50, vorzugsweise 15 bis 45 Mol-%, Caprolactam.

Die Herstellung der Polyamide erfolgt nach den bekannten Verfahren kontinuierlich oder diskontinuierlich, ausgehend von den Monomeren oder den aus ihnen hergestellten Salzen, die zweckmäßigerweise als wäßrige Lösung eingesetzt werden.

Als Flammschutzadditive ist (freies) Melamin überraschenderweise vorteilhaft und nicht mit den oben geschilderten Nachteilen behaftet.

Das Melamin wird insbesondere in Mengen von 5 - 20, vorzugsweise 8 - 16 Gew.-% eingesetzt.

Die Einarbeitung des Flammschutzmittels in das Polyamid erfolgt in bekannter Weise auf handelsüblichen Maschinen, z. B. auf Einwellen- oder Doppelwellenextrudern. Man extrudiert eine Mischung aus Polyamid und Flammschutzmittel, gegebenenfalls unter Zusatz von Glasfasern. Es ist aber auch möglich, Flammschutzmittel und Glasfasern in das geschmolzene Polyamid zu dosieren und diese Schmelze dann zu homogenisieren oder aber das Flammschutzmittel in glasfaserverstärktes Polyamid einzuarbeiten. Selbstverständlich kann das Flammschutzmitel auch als Konzentrat in einem Polymeren, beispielsweise in einem Polyamid oder Polyolefin, eingesetzt werden.

Die erfindungsgemäßen Polyamide zeichnen sich durch gutes Brandverhalten aus. Im Gegensatz zu den glasfaserverstärkten Standardpolyamiden 6 und 66 erreichen sie bei der Prüfung im UL-Test, Subj. 94, die Bewertung VO auch dann, wenn sie mit der üblicherweise verwendeten, beschlichteten Glasfaser verstärkt sind.

Die erfindungsgemäßen Polyamide sind wegen ihrer hellen Eigenfarbe in hellen Farbtönen einfärbbar. Die Oberfläche der melaminhaltigen Polyamide wird auch nach Lagerung in feuchter Atmosphäre bei höheren Temperaturen nicht verändert.

Die Polyamide können die üblichen Additive und Hilfsmittel enthalten, wie Gleit- und Entformungsmittel, Nukleierungsmittel, Stabilisatoren; ferner Füllstoffe, wie Mikroglaskugeln, Kreide; Quarze, wie Novaculit, und Silikate, wie Feldspat, Glimmer, Talkum, Wollastonit, sowie Kaolin in kalzinierter und nichtkalzinierter Form.

Die Glasfasern können geschlichtet und ungeschlichtet sein; vorzugsweise werden die handelsüblichen, geschlichteten Glasfasern in Mengen von 10 - 60, bevorzugt 15 - 40 Gew.-%, bezogen auf die gesamte Mischung, eingesetzt.

Als weitere Zusätze kommen außerdem Farbstoffe und Pigmente, insbesondere Farbruße und/oder Nigrosinbasen in Betracht, ferner Schlagzähmodifikatoren, beispielsweise auf der Basis von Copolymerisaten des Ethylens, Poly-(meth)-acrylaten und gepfropften Polybutadienen.

Die erfindungsgemäßen Polyamide sind zur Herstellung von flammwidrigen Formkörpern wie Spritzgußteilen, Platten oder extrudierten Profilen geeignet. Sie können als Sichtteile für technische Geräte und den Automobilbau eingesetzt werden. Sehr gut geeignet sind die Polyamide zur Herstellung von Teilen für den Elektrosektor wie Steckverbindungen und Steckerleisten.

Die in den Beispielen angegebenen relativen Viskositäten wurden an einprozentigen Lösungen in m-Kresol bei 25°C in einem Ubbelohde-Viskosimeter bestimmt.

Das Brandverhalten wurde nach den Vorschriften von UL, Subj. 94, an Prüfstäben von 1/16" Dicke gemessen.

Die Prüfung der Migration erfolgte nach Lagerung der Formkörper in einer mit Wasserdampf gesättigten Atmosphäre bei 50°C.

### Beispiele

### Beispiel 1

86 Gew.-Teile eines Copolyamids aus m-Xylylendiamin, Terephthalsäure und Adipinsäure mit einem Gehalt von 19,08 Mol-% Adipinsäure und einer relativen Viskosität von 2,5 werden mit 14 Gew.-Teilen Melamin in einem Einwellenextruder (Haake) bei einer Massetemperatur von 275°C compoundiert.

Die Prüfkörper aus dieser Mischung haben folgende Eigenschaften:
Brandverhalten: VO
Nach 10 Tagen keine Migration.

### Beispiel 2

Man compoundiert 69 Gew.-Teile des Copolyamids aus Beispiel 1, 20 Gew.-Teile geschlichtete Glasfasern Silenka® 8041 und 11 Gew.-Teile Melamin, wie in Beispiel 1 beschrieben. Die Massetemperatur beträgt 295°C.
Brandverhalten: VO
Nach 10 Tagen keine Migration.

### Beispiel 3

Man compoundiert 71 Gew.-Teile eines Polyamids aus m-Xylylendiamin und Isophthalsäure mit einer relativen Viskosität von 2,2 20 Gew.-Teile Glasfaser Silenka® 8041 und 9 Gew.-Teile Melamin, wie in Beispiel 1 beschrieben, bei einer Massetemperatur von 295°C.
Brandverhalten: VO
Nach 10 Tagen keine Migration.

### Beispiel 4

Man compoundiert 71 Gew.-Teile des Copolyamids aus Isophthalsäure, Adipinsäure und m-Xylylendiamin mit einem Gehalt von 15,8 Mol-% Adipinsäure und einer relativen Viskosität von 2,1, 20 Gew.-Teile Glasfasern Silenka 8041 und 9 Gew.-Teile Melamin, wie in Beispiel 1 beschrieben. Die Massetemperatur beträgt 290°C.
Brandverhalten: VO
Nach 10 Tagen keine Migration.

### Vergleichsbeispiele

### Vergleichsbeispiel 1

Wie in Beispiel 1 beschrieben compoundiert man 88 Gew.-Teile eines Polyamids aus m-Xylylendiamin und Adipinsäure, das 30 Gew.-Teile Glasfasern enthält, mit 12 Gew.-Teilen Melamin bei einer Massetemperatur von 290°C.
Brandverhalten: V2
Nach 5 Tagen deutliche Belagbildung.

### Vergleichsbeispiel 2

Wie in Beispiel 1 beschrieben compoundiert man bei 285°C Massetemperatur 65 Teile eines Polyamids aus m-Xylylendiamin und Azelainsäure mit einer relativen Viskosität von 2,1, 20 Gew.-Teile Glasfasern Silenka® 8041 und 15 Gew.-Teile Melamin.
Brandverhalten: V2
Nach 10 Tagen keine Migration.

### Vergleichsbeispiel 3

Wie in Beispiel 1 compoundiert man 86 Gew.-Teile Polyamid 66 mit einer relativen Viskosität von 3,0 und 14 Gew.-Teile Melamin bei einer Massetemperatur von 280°C.
Brandverhalten: VO
Starke Belagbildung nach 24 Stunden.

### Vergleichsbeispiel 4

Man compoundiert, wie in Beispiel 1 beschrieben, 65 Gew.-Teile Polyamid 66, 20 Gew.-Teile Glasfasern Silenka® 8041 und 15 Gew.-Teile Melamin bei einer Massetemperatur von 290°C.
Brandverhalten: V2
Belagbildung nach 24 Stunden.

## Patentansprüche

1. Brandwidrig ausgerüstete, thermoplastisch verarbeitbare Polyamidformmassen mit guten Oberflächen, dadurch gekennzeichnet, daß das Polyamid hergestellt wird aus
A) 25 bis 50 Mol % Xylylendiamin,
B) 15 bis 50 Mol % aromatischen Dicarbonsäuren wie Isophthalsäure und Terephthalsäure,
C) 0 bis 25 Mol % nichtaromatischen Diaminen, und/oder
D) 0 bis 35 Mol % nichtaromatischen Dicarbonsäuren,
wobei die Summe der aromatischen Diamine und Dicarbonsäuren wenigstens 70 Mol % beträgt und wobei Melamin als Flammschutzmittel in 5-20 Gew.-% verwendet wird.

2. Polyamidformmassen nach Anspruch 1, dadurch gekennzeichnet, daß sie Copolyamide aus m-Xylylendiamin, Terephthalsäure und 10 bis 50 Mol % Caprolactam enthalten.

3. Thermoplastisch verarbeitbare Polyamide gemäß Anspruch 1, dadurch gekennzeichnet, daß sie 10 - 60 Gew.-% Glasfasern enthalten.

## Claims

1. Flameproofed, thermoplastically processable polyamide moulding compounds having surfaces of high quality, characterized in that the polyamide is produced from
A) 25 to 50 mol-% of xylylene diamine,
B) 15 to 50 mol-% of aromatic dicarboxylic acids, such as isophthalic acid and terephthalic acid,
C) 0 to 25 mol-% of non-aromatic diamines and/or
D) 0 to 35 mol-% of non-aromatic dicarboxylic acids,
the sum total of aromatic diamines and dicarboxylic acids being at least 70 mol-% and melamine being used as the flameproofing agent in quantities of 5 to 20% by weight.

2. Polyamide moulding compounds as claimed in claim 1, characterized in that they contain copolyamides of m-xylylenediamine, terephthalic acid and 10 to 50 mol-% of caprolactam.

3. Thermoplastically processable polyamides as claimed in claim 1, characterized in that they contain from 10 to 60% by weight of glass fibers.

## Revendications

1. Compositions de polyamides à mouler, traitées pour résister à la flamme et pour être mises en oeuvre par voie thermoplastique, ces compositions ayant de bonnes surfaces et étant caractérisées en ce que le polyamide est préparé à partir de :
A) 25 à 50 mol % de xylylènediamine,
B) 15 à 50 mol % d'acides dicarboxyliques aromatiques comme l'acide isophtalique et l'acide téréphtalique,
C) 0 à 25 mol % de diamines non aromatiques, et/ou
D) 0 à 35 mol % d'acides dicarboxyliques non aromatiques,
la somme des diamines et des acides dicarboxyliques aromatiques valant au moins 70 mol %, et la mélamine étant utilisée, en étant incorporée en une proportion de 5 à 20 % en poids, comme agent de protection contre la propagation d'une flamme.

2. Compositions de polyamides à mouler selon la revendication 1, caractérisées en ce qu'elles contiennent des copolyamides formés à partir de la m-xylylènediamine, de l'acide téréphtalique et de 10 à 50 mol % de caprolactame.

3. Polyamides pouvant être mis en oeuvre par voie thermoplastique selon la revendication 1, caractérisés en ce qu'ils contiennent 10 à 60 % en poids de fibres de verre.
